# EUROPEAN PATENT APPLICATION

(11) **EP 4 718 338 A1**
(43) Date of publication of application: **01.04.2026**
(21) Application number: 24383044.5
(22) Date of filing: 27.09.2024
(51) Int. Cl.: G06N 10/20, G06N 10/60

(54) **QUANTUM-INSPIRED TENSOR NETWORK SIMULATOR OF QUANTUM COMPUTERS AND METHOD ASSOCIATED THEREWITH**

(71) Applicant: Multiverse Computing, S.L., 20014 Donostia - San Sebastian (ES)
(72) Inventor: PATRA, Siddhartha, Donostia - San Sebastian (ES); SINGH, Sukhbinder, Toronto (ES); JAHROMI, Saeed, Donostia - San Sebastian (ES); ORUS, Roman, Donostia - San Sebastian (ES)
(74) Representative: Elion IP, S.L.

(57) **Abstract**

The methods, apparatuses and systems involve simulating a quantum computer by generating a dynamic tensor network according to a structure of a quantum circuit to be simulated. The method comprises: reading two-qubit terms of the quantum circuit; providing a two-qubit gate for each read two-qubit term thereby providing a tensor per qubit, and a connecting tensor index for the two tensors; shortening the connecting tensor index by using a value decomposition and keeping a predetermined number D of largest values; removing at least as many connecting tensor indices as needed to reduce the number of connecting tensor indices down to a predetermined threshold M if the number exceeds M.

## Description

### TECHNICAL FIELD

The disclosure pertains to the field of digital computing. More particularly, the disclosure relates to a quantum-inspired tensor network simulator of quantum computers. The disclosure inter alia includes a system and method that admits a quantum circuit of a quantum computer to be simulated.

### BACKGROUND

Quantum computing is a rapidly evolving field that leverages the principles of quantum mechanics to perform computations. Quantum computers use quantum bits, or qubits, which can exist in multiple states at once, enabling them to perform many calculations simultaneously. This makes them potentially far more powerful than classical computers for certain tasks. However, simulating quantum computers is a complex task due to the intricate correlation structure of quantum circuits. Traditional tensor network simulators often struggle with speed and precision, limiting their effectiveness. Furthermore, the static nature of these simulators often fails to capture the dynamic nature of quantum circuits. Therefore, there is a need for improved methods and systems for simulating quantum computers that can dynamically adapt to the correlation structure of the quantum circuit, thereby enhancing the speed and precision of the simulation.

### SUMMARY

In a first aspect, a method is provided for simulating a quantum computer or a quantum circuit thereof. The method involves providing a tensor network based on a predetermined quantum circuit of a predetermined quantum computer that has a plurality of unitary two-qubit quantum gates configured to act on a set of qubits. The method includes: reading at least some two-qubit terms of the predetermined quantum circuit; selecting a read two-qubit term and providing a two-qubit gate such that: a tensor per qubit is provided, and a connecting tensor index for the provided two tensors is provided between them; shortening the connecting tensor index by using a value decomposition (e.g., factorization) and keeping a predetermined number D (for example, but without limitation, 10 or more, 50 or more, 100 or more, etc.) of largest values; when a number of connecting tensor indices of a resulting tensor network is greater that a predetermined threshold M, removing at least as many connecting tensor indices as needed to reduce the number of connecting tensor indices down to the predetermined threshold M (for example, but without limitation, 4, 5, 6 or more, etc.); and repeating the selecting, shortening and removing steps for all other read two-qubit terms. The method may be completely run in one or more classical processors, in which case the method is a computer-implemented method.

In a second aspect, an apparatus or system, for example a data processing apparatus or system, is provided for implementing the method above, for example by way means included in the apparatus or system for carrying out the steps of the method. To this end, the apparatus or system includes at least one processor and at least one memory module for storing instructions that, upon execution by the at least one processor, make the apparatus or system to carry out the method.

The apparatus or system includes, in some embodiments: means for reading at least some two-qubit terms of a predetermined quantum circuit; means for selecting a read two-qubit term; means for providing a two-qubit gate such that: a tensor per qubit of the selected two-qubit term is provided, and a connecting tensor index for the provided two tensors and between them; means for shortening the connecting tensor index by using a value decomposition and keeping a predetermined number D of largest values; and means for removing at least as many connecting tensor indices as needed to reduce the number of connecting tensor indices down to a predetermined threshold M when a number of connecting tensor indices of a resulting tensor network is greater that the predetermined threshold M.

In a third aspect, a computer program is provided comprising instructions which, when the program is executed by at least one computing apparatus or system with at least one processor, cause the at least one computing apparatus or system to carry out the steps of a method as disclosed in the first aspect.

In some embodiments, the computer program is embodied on a non-transitory computer-readable storage medium storing the computer program.

In a fourth aspect, a data carrier signal carrying a computer program as described in the third aspect is provided.

In a fifth aspect, a use of the apparatus or system of the second aspect is provided. The use of the apparatus or system may be, for example, for modeling noise of a quantum computer, checking correct operation of a quantum computer, or manufacturing a quantum computer or quantum circuit thereof.

In a sixth aspect, a method is provided for manufacturing a quantum computer or quantum circuit. The method includes: conducting the steps of a method according to the first disclosure based on an existing quantum computer or quantum circuit thereof; assessing limitations in operation of the existing quantum computer or quantum circuit with a simulation thereof; and manufacturing a quantum computer or quantum circuit thereof based on the assessment made.

### BRIEF DESCRIPTION OF THE DRAWINGS

To complete the description and in order to provide for a better understanding of the disclosure, a set of drawings is provided. Said drawings form an integral part of the description and illustrate embodiments of the disclosure, which should not be interpreted as restricting the scope of the disclosure, but just as examples of how the disclosure can be carried out. The drawings comprise the following figures:
FIG. 1 illustrates, in a flowchart, a method in accordance with some embodiments.
FIG. 2 shows an apparatus or system in accordance with some embodiments.

### DETAILED DESCRIPTION

The aspects of the present disclosure enable the simulation of quantum computers that may adapt to the correlation structure of the quantum circuit that the quantum computers have. The aspects can do so adjusting a balance between precision of the simulation and resources needed for carrying out the simulation, especially processing power and memory allocation. All this, in turn, makes it possible to tailor the speed and precision of the resulting computational system.

The aspects of the present disclosure make it possible to solve computational problems, validate system performance of quantum computers, simulate the noise that a quantum computer may have, etc. The simulator or simulation provided may be of a quantum computer with quantum circuits of any kind.

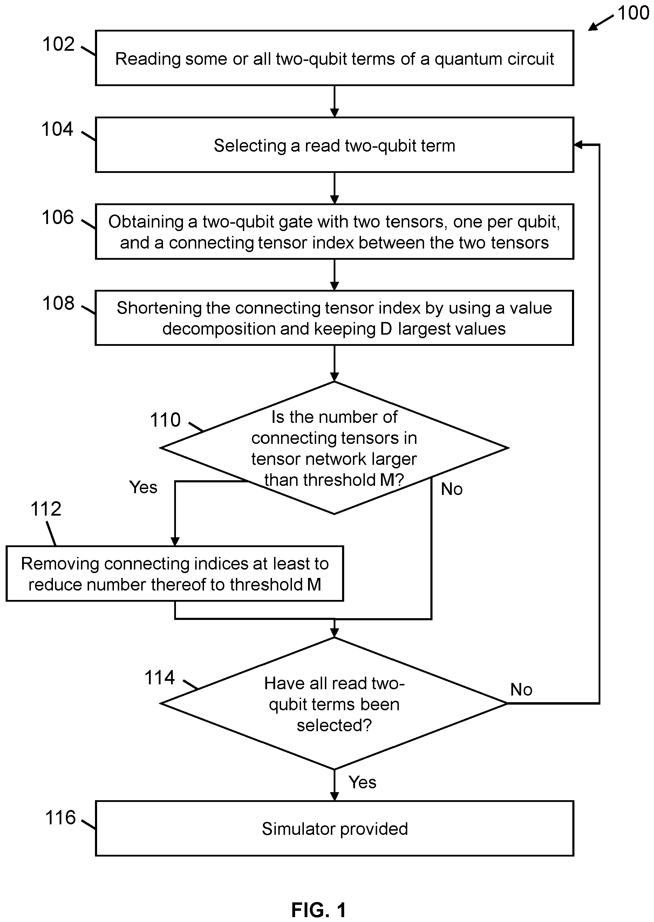

FIG. 1 illustrates, in a flowchart, a method 100 in accordance with certain embodiments.

The method 100 involves the provision 116 of a tensor network that works a simulator of a quantum circuit or a plurality of quantum circuits of a quantum computer, thereby representing the structure and operation of a quantum computer in a simulator. The tensor network is a mathematical model that mirrors the interconnections and dependencies within the quantum circuit. The method 100 interprets the circuit and constructs a corresponding tensor network that represents quantum states and operations and, in general terms, the correlation structure, which is the pattern of entanglement and interactions between qubits within the quantum circuit. The tensor network provided by the method 100 captures the behavior of the quantum computer, which is essential for the fidelity of the simulation.

The method 100 includes a step whereby the computing apparatus or system reads 102 at least some two-qubit terms of a quantum circuit of a quantum computer. In some embodiments, not just a subset but all two-qubit terms of the quantum circuit are read 102.

The method 100 includes steps whereby the computing apparatus or system selects 104 a read 102 two-qubit term and provides 106 a two-qubit gate for the selected 104 two-qubit term. The two-qubit gate provided 106 includes two tensors, one tensor per qubit and a tensor link index, i.e., a connecting tensor index, which is between the provided 106 two tensors.

The tensors provided 106 are mathematical representations that encapsulate the pattern of entanglement and interactions between qubits within the quantum circuit. The connecting index that emerges between the tensors indicates the relationship between the qubits of the two-qubit term selected 104. The purpose of generating these tensors and the connecting index is to construct a tensor network that mirrors the correlation structure of the quantum circuit.

The method 100 includes step whereby the computing apparatus or system shortens 108 the connecting tensor index. To this end, the shortening 108 includes using a value decomposition and retaining a specified number of values, preferably the largest ones and as many as defined in a configurable predetermined number D. When the number of connecting tensor indices is equal to or lower than the predetermined number D, preferably no shortening 108 is conducted. The shortening 108 may be truncation in some embodiments. In some embodiments, the value decomposition is Singular Value Decomposition (SVD), which is a mathematical procedure that may decompose a matrix into three other matrices, representing the original singular vectors and singular values of the matrix. The connecting tensor index is a matrix that represents the connections between tensors in a network. By decomposing this index, the singular values are obtained, which are ordered by their magnitude.

The shortening 108 retains the top D singular values and their corresponding singular vectors. The selection (i.e., configuration) of the predetermined number D may be based on a balance between the representation accuracy of the tensor network and the computational resources. Retaining a larger number of singular values potentially increases the accuracy of the tensor network representation but also requires more computational resources.

The shortening 110 reduces the complexity of the tensor network by discarding the less significant singular values, which have a lower magnitude and contribute less to the overall structure. This reduction is performed to manage the size of the tensor network and to focus computational efforts on the significant aspects of the optimization problem.

The method 100 then checks 110, by the computing apparatus or system, whether a number of connecting tensor indices of the tensor network is greater that a configurable predetermined threshold M. If the number is greater, the computing apparatus or system removes 112 connecting tensors at least to have the number thereof below the threshold M. If the number is not greater, no removal 112 takes place.

This removal 112 or reduction is achieved by evaluating the connecting tensor indices and removing those that are deemed less significant based on a metric, such as a metric related to the Shannon entropy of the squared singular values. In this sense, in some embodiments, the removal 112 of the connecting tensors is of the tensors having a smallest Shannon entropy of the squared singular values. To that end, the Shannon entropy of the squared values may be computed.

The purpose of this computation is to identify which connecting tensor indices have a lower contribution to the overall structure of the tensor network. By identifying and truncating the indices with the smallest entropy, the system can reduce the complexity of the tensor network. This reduction is optional, but preferable, to keep the tensor network manageable and to facilitate the provision of a simulation or simulator within a particular timeframe and set of resources.

The Shannon entropy provides a quantitative measure of the information content associated with the connecting tensor indices. The squared singular values represent the strength of the connections between tensors in the network. By focusing on the Shannon entropy, the system identifies which connections contribute less to the overall structure and can be removed to reduce complexity without significantly affecting the ability of the network to represent the correlation structure of the quantum circuit.

The Shannon entropy may be computed for each connecting tensor index and stored in a memory module. Then, these indices may be sorted and then the ones with the lowest values are removed 112 until the number of indices aligns with the limit M. The tensors and the indices connecting them are the focus of this step, with the goal of preserving the integrity of the tensor network while adhering to the specified limit M.

The process is iterated, as part of a loop, until all read 102 two-qubit terms are processed in the fashion above, as checked 114 during the method. While two-qubit terms read 102 are yet to be selected, the method 100 goes back to the selection 104 and reiterates the process with a different read two-qubit term so as to progressively select them all.

Quantum gates are matrices that act on the vector space of qubits. When a two-qubit gate is applied, it alters the state of the qubits, represented by the tensor product of the qubits' state vectors. The resulting state is then represented by new tensors, and the connecting index reflects the mathematical link between these tensors in the tensor network. By iterating this process for each gate in the quantum circuit, the tensor network that simulates the structure and correlations of the quantum circuit is provided 116.

The control logic in the process of providing the simulation or simulator orchestrates the sequence of operations, while the data structures representing the quantum circuit and the tensor network evolve with each applied gate. The control logic tracks the sequence of gates and manages the evolving structure of the tensor network.

The sequence of operations may be determined by the correlation structure of the quantum circuit, which may dictate the order in which the two-qubit gates are applied. This structure reflects the entanglement and quantum correlations in the system being simulated.

The simulator may be utilized to engage with problems that have practical significance in various industries, such as simulations in material science, optimization tasks, and/or cryptographic applications.

In some examples, the simulator is used for replicating operations of a quantum computer and comparing the outputs of the simulator and the quantum computer to ensure that the computations are being performed as expected. This also serves for improving the simulator in case there are discrepancies, or to determine whether the shortening 108 and/or removing 112 steps may have had a large impact on the accuracy of the simulated quantum computer.

In some examples, the simulator models noise in quantum computers. This involves introducing disturbances into the simulation to replicate the effects of noise on quantum computations. Understanding the impact of noise is vital for developing strategies to reduce its effects on quantum computations.

In some examples, the simulator is used to model a variational quantum circuit, which can be used as a quantum optimizer, or as a subroutine for a quantum machine learning algorithm. In some situations, such quantum machine learning algorithm can be implemented as a classifier, that can be trained to implement, for instance, predictive maintenance of the machines in a factory line. In other implementations, the variational quantum circuit can be used to detect anomalies, such as detecting features in images, and intrusions in networks, including cybersecured networks.

In some examples, the simulator can be used to model the dynamics of a quantum material. In other examples, the simulator can be used to mimic the dynamics of a complex molecule, and to model complex chemical reactions.

In some embodiments, the quantum computer or the quantum circuit operates or is part of an installation or system.

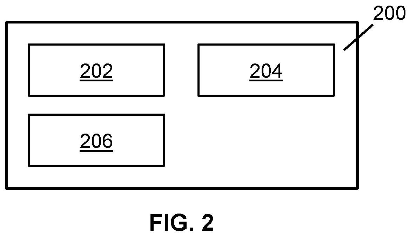

Figure 2 shows an apparatus or system 200 in accordance with embodiments.

The apparatus or system 200 includes one or more processors 202. The apparatus or system 200 also includes at least one memory module 204 for storage of data such as readings from a quantum circuit, entropy values, etc. Additionally, the at least one memory module 204 may store a computer program in the form of instructions that, upon running, perform a method according to the present disclosure.

The apparatus or system 200 may also include, in some embodiments, a communications module 206 configured to transmit data to and/or receive data from, in wired and/or wireless form, computing apparatuses or systems. For example, the apparatus or system 200 may transmit operating instructions to, e.g., a controller for configuring the operation of a quantum circuit or computer, and/or receive data from the quantum circuit or computer once converted into electrical signals.

In some embodiments, one or more processors 202 comprise or are part of at least one field-programmable gate array (i.e., FPGA), and the at least one FPGA stores instructions and/or runs a method according to the present disclosure.

In some embodiments, the apparatus or system is a quantum circuit simulator or a quantum computer simulator.

In some embodiments, the apparatus or system is a controller of a quantum circuit or computer.

In this text, the term "includes", "comprises" and derivations thereof (such as "including", "comprising", etc.) should not be understood in an excluding sense, that is, these terms should not be interpreted as excluding the possibility that what is described and defined may include further elements, steps, etc.

On the other hand, the disclosure is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A method (100) for simulating a quantum computer or a quantum circuit thereof, the method comprising:
reading (102) at least some two-qubit terms of the quantum circuit of the quantum computer;
selecting (104) a read two-qubit term and providing (106) a two-qubit gate such that:
a tensor per qubit is provided, and
a connecting tensor index for the provided two tensors is provided between them;
shortening (108) the connecting tensor index by using a value decomposition and keeping a predetermined number D of largest values;
when a number of connecting tensor indices of a resulting tensor network is greater that a predetermined threshold M, removing (112) at least as many connecting tensor indices as needed to reduce the number of connecting tensor indices down to the predetermined threshold M; and
repeating the selecting, shortening and removing steps for all other read two-qubit terms.

2. The method (100) of claim 1, wherein a tensor network provided with the plurality of two-qubit gates is generated according to a correlation structure of the quantum computer or quantum circuit to be simulated.

3. The method (100) of any one of the preceding claims, wherein the quantum circuit or the quantum computer has a plurality of unitary two-qubit quantum gates configured to act on a set of qubits.

4. The method (100) of any one of the preceding claims, wherein, in the reading step, all two-qubit terms of the quantum circuit of the quantum computer are read.

5. The method (100) of any one of the preceding claims, wherein the value decomposition of the shortening step is a truncation using a Singular Value Decomposition.

6. The method (100) of any one of the preceding claims, wherein the removing step removes the connecting tensors having a smallest Shannon entropy of the squared singular values.

7. The method (100) of any one of the preceding claims, wherein the simulation checks correct operation of the quantum computer by replicating operations of the quantum computer and comparing outputs thereof with outputs of the simulation.

8. The method (100) of any one of the preceding claims, further comprising introducing disturbances into the simulation to determine effects of noise on the quantum computer.

9. The method (100) of any one of the preceding claims, wherein the simulation is of a quantum computer that performs optimization of problems and/or cryptographic tasks.

10. An apparatus or system (200) comprising means for carrying out a method of any one of the preceding claims.

11. An apparatus or system (200) comprising at least one processor (202) and at least one memory module (204), the at least one processor and the at least one memory module being configured to:
read at least some two-qubit terms of a quantum circuit of a quantum computer;
select a read two-qubit term and provide a two-qubit gate such that:
a tensor per qubit is provided, and
a connecting tensor index for the provided two tensors is provided between them;
shorten the connecting tensor index by using a value decomposition and keeping a predetermined number D of largest values;
remove at least as many connecting tensor indices as needed to reduce the number of connecting tensor indices down to a predetermined threshold M when a number of connecting tensor indices of a resulting tensor network is greater that the predetermined threshold M; and
repeat the selection, shortening and removal for all other read two-qubit terms.

12. The apparatus or system (200) of any one of claims 10-11, further comprising the quantum circuit.

13. A computer program comprising instructions which, when the program is executed by at least one computing apparatus or system (200) with at least one processor (202), cause the at least one computing apparatus or system to carry out the steps of a method (100) according to any one of claims 1-9.

14. Use of the apparatus or system (200) of any one of claims 10-12 for modeling noise of a quantum computer, checking correct operation of a quantum computer, or manufacturing a quantum computer or quantum circuit thereof.

15. A method for manufacturing a quantum computer or quantum circuit, comprising:
conducting steps of a method (100) according to any one of claims 1-9 for simulating an existing quantum computer or quantum circuit thereof;
assessing limitations in operation of the existing quantum computer or quantum circuit with the simulation performed; and
manufacturing a quantum computer or quantum circuit thereof based on the assessment made.
